# EUROPÄISCHE PATENTSCHRIFT

(11) **EP 2 444 680 B1**
(45) Veröffentlichungstag und Bekanntmachung des Hinweises auf die Patenterteilung: **11.02.2015**
(21) Anmeldenummer: 11008329.2
(22) Anmeldetag: 17.10.2011
(51) Int. Cl.: F16C 13/00

(54) **Walze mit gummielastischem Walzenmantel**
Roller with elastic rubber cover
Rouleau doté d'une gaine en caoutchouc élastique

(30) Priorität: 22.10.2010 DE 102010049458
(43) Veröffentlichungstag der Anmeldung: 25.04.2012
(73) Patentinhaber: Paul Sauer GmbH & Co. Walzenfabrik KG, 10179 Berlin (DE)
(72) Erfinder: Sauer, Alexander, 10179 Berlin (DE)

(56) Entgegenhaltungen:
- EP-A1- 1 580 316
- EP-A2- 0 922 806
- EP-B1- 1 657 076

## Beschreibung

Die Erfindung betrifft Walzen mit einem gummielastischen Walzenmantel, die insbesondere zum Auf- und Übertragen von flüssigen Medien wie Farben, Lacken, Lösungen, Klebstoffen und ähnlichem in Druckwerken und Walzenauftragmaschinen, zum mechanischen Bearbeiten von Werkstückoberflächen oder zum Andrücken, Bewegen, Halten, Leiten, Führen, Quetschen oder Schälen von Materialbahnen, Werkstücken oder Lebensmitteln in Be- und Verarbeitungsmaschinen geeignet sind.

Gummielastische Beschichtungen (= Walzenmäntel) von Walzen in Druckwerken von Verpackungs-, Bogenoffset- und Rotationsdruckmaschinen (insbesondere Farb- und Feuchtwalzen), in Walzenauftragmaschinen (insbesondere Kaschier-, Laminier- und Lackierwalzen) sowie in Maschinen zur Holz-, Metall- oder Kunststoffverarbeitung (insbesondere Quetsch-, Schleif- und Transportwalzen) sind einer hohen mechanischen und dynamischen Belastung ausgesetzt. Mechanische Belastungen werden beispielsweise zwischen zwei benachbarten Walzen oder zwischen einer Walze und einer anliegenden Werkstückoberfläche durch den betriebsbedingten Anpress- oder Liniendruck und durch Reibungskräfte hervorgerufen. Eine dynamische Belastung des gummielastischen Walzenmantels erfolgt durch das wiederholte Eindrücken der Beschichtungsoberfläche im Nip, d.h. an der Kontaktfläche zwischen zwei benachbarten Walzen oder zwischen einer Walze und einer Werkstückoberfläche. Die Rotation der Walze bewirkt dabei ein Wandern des Nips über den Umfang des Walzenmantels, wobei zusätzlich Scherkräfte auf das Material der gummielastischen Walzenbeschichtung wirken. Insbesondere in schnell laufenden Anlagen führen die auf den Walzenbezug einwirkenden Druck- und Scherkräfte deshalb nicht selten zu einer unvorhersehbaren Zerstörung des Walzenbezugs (= Walzenmantels) und einer damit verbundenen Störung und Behinderung des Produktionsprozesses.

Zur Behebung dieses Problems werden gummielastische Walzenbezüge bisher durch die Variation von Rohstoffen, Additiven und Füllstoffen verbessert. Eine Veränderung der Rohstoffe und ihrer Anteile im elastomeren oder elastischen Kunststoffmaterial des Walzenmantels sowie der Zuschlag von Additiven und Füllstoffen bewirken jedoch stets auch eine Veränderung der Materialeigenschaften des Bezugswerkstoffs. Aus diesem Grund geht die Optimierung der Materialfestigkeit eines gummielastischen Walzenmantels stets mit einer aufwendigen Korrektur der chemischen Beständigkeit des Bezugsmaterials und seiner physikalischen Werkstoffeigenschaften einher.

Es bestand somit die Aufgabe, Walzen mit einem gummielastischen Walzenmantel zu schaffen, bei denen, ohne die Materialeigenschaften der Walzenbeschichtung zu verändern, die Auswirkung der mechanischen und dynamischen Belastung auf die gummielastische Walzenbeschichtung verringert ist.

Hierzu offenbart die Offenlegungsschrift DE 10156146 A1 einen Walzenmantel für eine Presswalze zur Behandlung einer Materialbahn mit einer Schicht aus elastomerem Material, in die zur Verstärkung längs und quer zur Bahnlaufrichtung verlaufende Fäden eingebettet sind. Zumindest abschnittsweise ist dabei wenigstens eine Lage von zusätzlichen Verstärkungsfäden in die Schicht eingebettet, wobei die zusätzlichen Verstärkungsfäden in einem Winkel zwischen 20° und 70° zur Bahnlaufrichtung verlaufen. Zumindest zwei Lagen dieser zusätzlichen Verstärkungsfäden können alternativ von einem Gewebe mit etwa senkrecht zueinander verlaufenden Verstärkungsfäden, aber auch von einem gewebten, geflochtenen oder gehäkelten Band, welches schraubenlinienförmig im Walzenmantel verläuft, gebildet werden. Nach dieser Offenbarung wird eine Verstärkung des Walzenmantels im Wesentlichen durch längs und quer zur Bahnlaufrichtung verlaufende im Walzenmantel eingebettete Fäden gegeben.

Ähnlich offenbart EP 1580316 A1 einen Schuhpressriemen für die Papierherstellung, der einen Grundkörper aufweist, der ein Fadengelege mit fixierten Kreuzungspunkten und einen in einer Helix gewickelten Faden umfasst. Das Fadengelege kann aus mehreren sich überlappenden Abschnitten, einem einzigen Stück oder einem gewickelten Gewebestreifen bestehen. Der Grundkörper weist schuhund papierseitig eine Schicht aus "Harz" auf und ist von diesem Harz durchdrungen. Prinzipiell soll das Harz aus dem Bereich der Elastomere gewählt werden können; konkret offenbart ist ausschließlich die bevorzugte Verwendung von Polyurethan. Der Schuhpressriemen wird hergestellt, indem auf einen Dorn mit polierter Oberfläche eine erste Schicht aus heißvernetzendem Polyurethan (TDI-Präpolymer mit H/NCO-Equivalent und DMTDA-Vernetzer) im Rotationsgießverfahren aufgetragen und anschließend vernetzt wird, der Grundkörper aus Gittermaterial und Wicklungen eines Fadens darauf gefertigt wird und darauf eine zweite Schicht aus dem Polyurethan aufgebracht wird, wobei das Polyurethan den Grundkörper durchdringt. Abschließend wird der Schuhpressriemen vom Dorn entfernt und seiner Verwendung zugeführt.

Einen Schuhpressriemen ("harzimprägniertes endloses Band") für die Papierherstellung offenbart ebenfalls EP 0922806 A2. Das endlose Band umfasst ein Grundgewebe in der Form einer Bandschleife, wobei als Material des Gewebebandes Drehergewebe, im Rund- oder Flachstrickverfahren hergestelltes Gewebe, im Raschelverfahren gestricktes Gewebe, Gewebe in Leinwandbindung sowie offene und ungewebte Gewebe offenbart sind. Zusätzliche Fadenwicklungen sind nicht vorgesehen. Die Gewebe weisen fixierte Kreuzungspunkte und einen Fadenabstand von 0,16 cm bis 1,27 cm auf. Sie sind von einem synthetischen Polymerharz umgeben und durchdrungen. Als synthetisches Polymerharz sind beispielsweise Polyamidharz sowie Acryl- und Epoxyharz, nicht aber Elastomer offenbart. Der Schuhpressriemen wird auf einem Dorn gefertigt, über dessen Mantelfläche in einem bestimmten Abstand ein endloses Gewebeband seitlich eingespannt ist. Das Polymerharz wird im Rotationsgießverfahren aufgetragen und durchdringt beim Auftrag das Gewebeband. Ein Grundproblem des Herstellverfahrens ist die Schwierigkeit, während des Imprägnier- und Beschichtungsverfahrens die ganze Luft aus dem Gewebe zu entfernen.

Die Offenlegungsschrift DE 102005023331 A1 offenbart einen Druckzylinder für den Flexodruck mit einer auf einem Druckwalzenkern angeordneten Trägerschicht aus einem Gewebematerial und einem Kunstharz sowie einer auf der Trägerschicht angeordneten Elastomerschicht. Als Kunstharz sind Polyesterharz, Phenol-Formaldehyd-Harz, Epoxidharz und Acrylharz angegeben. Die Trägerschicht entspricht dabei der üblicherweise gefertigten Trägerhülse aus Faserverbundwerkstoff. Des weiteren wird ein optional zwischen der Trägerschicht und der Elastomerschicht angeordnetes gitterförmiges Klebeband offenbart, welches zum Fixieren der noch nicht verfestigten Trägerschicht und zum Herausdrücken von Luftblasen aus dem darin enthaltenen Gewebematerial vorgesehen ist. Eine Verstärkung der Elastomerschicht durch Gewebe ist nicht beschrieben.

Die Offenlegungsschrift DT 2355308 A1 betrifft eine tragende Einlage für KFZ-Reifen aus im Gieß- und Spritzguss verarbeitbaren zu gummielastischen Polymeren aushärtenden Ein- bzw. Mehrkomponentensystemen. Alternativ zu bekannten flexiblen Textilschichten wird eine Einlage aus einem standfesten Fasergerüst mit fixierten Kreuzungspunkten, beispielsweise aus Stahl, Glas oder hochschmelzenden Kunststoffen mit hinreichender Standfestigkeit vorgeschlagen. Eine standfeste tragende Einlage dieser Art würde den Einsatzbedingungen von gummielastischen Walzenbezügen nicht genügen.

Aus dem Stand der Technik ist die Herstellung von Faserverbundwerkstoffen unterschiedlicher Art aus Fasermaterial, einschließlich gitterförmiger Gewebestrukturen, und Harzen allgemein bekannt. Anwendungen im Bereich der Walzenkonstruktion betreffen bisher wesentlich die Herstellung von leichtgewichtigen Trägerhülsen, sogenannten Sleeves, für darauf aufzutragende Walzenbeschichtungen. Ein gummielastischer Walzenmantel ist jedoch kein Faserverbundwerkstoff aus Fasermaterial und Harzen der Art, wie sie beispielsweise nach UNSPSC Code 13111000 Resins und den zugehörigen Untergruppen klassifiziert sind. Ein gummielastischer Walzenmantel stellt vielmehr eine elastomere Walzenbeschichtung dar und besteht aus einem Material mit typischen gummiartigen Eigenschaften, insbesondere bezüglich Dehnungs-, Rückstell- und Elastizitätsverhalten.

Entgegen der Lehren des dargestellten Standes der Technik wurde gefunden, dass allein durch die Einbettung von textilem Flächengebilde aus Verstärkungsfasern mit fixierten Kreuzungs- oder Berührungspunkten im gummielastischen Walzenmantel die gestellte Aufgabe gelöst werden kann.

Gegenstand der Erfindung sind daher Walzen mit einem gummielastischen Walzenmantel gemäß Anspruch 1 sowie daraus folgende Ausführungsformen, Herstellverfahren und Verwendungen.

Der grundsätzliche Aufbau und die Herstellung von Walzen, Walzenbezügen, Fasern, Fäden und textilen Flächengebilden sind in der Walzen- und Textilkunde hinlänglich bekannt und dem Erfindungsgegenstand zugrunde gelegt.

Der Erfindungsgegenstand umfasst wesentlich einen zylindrischen Walzenkern, der auch aus einer Trägerhülse bestehen oder eine solche umfassen kann, einen diesen umgebenden gummielastischen Walzenmantel (auch Walzenbezug bzw. Bezug oder Walzenbeschichtung bzw. Beschichtung genannt) aus elastomerem oder elastischem Kunststoffmaterial sowie eine oder mehrere in diesem Walzenmantel eingebettete textile, zwei- oder dreidimensionale Flächengebilde aus Fäden mit verschiebefest fixierten Kreuzungs- oder Berührungspunkten. Zur Verwendung wird dieser Grundkörper gewöhnlich stirnseitig mit Zapfen und / oder Lager versehen oder wahlweise starr oder frei drehend auf eine Walzenachse montiert.

Der Erfindungsgegenstand kann insbesondere zum Auf- und Übertragen flüssiger Medien wie Leime, Klebstoffe, Farben, Lösungen und Lacke auf laufende Bahnen oder Werkstücke verwendet werden. Bevorzugte Ausführungsformen betreffen daher Auf- und Übertragwalzen in Walzenauftragmaschinen allgemein sowie Farb-, Feucht- und Lackierwalzen in Bogenoffset- und Rotationsdruckmaschinen im Besonderen. Der Erfindungsgegenstand kann aber auch in anderen Anwendungen eine vorteilhafte Ausgestaltung einer Walze mit einem gummielastischen Bezug darstellen.

Als Material des gummielastischen Walzenmantels (nachfolgend zusammenfassend "elastomeres oder elastisches Kunststoffmaterial" genannt) werden erfindungsgemäß Stoffe der UNSPSC Codegruppe 13100000 Rubber and Elastomers und der zugehörigen Untergruppen aufgefasst. Hiervon werden insbesondere Elastomere und elastische Kunststoffe auf Basis von Naturkautschuk (NR), synthetischem Kautschuk, z.B. Acrylnitril-Butadien-Kautschuk (NBR, HNBR, XNBR), Ethylenkautschuk (CM, CSM), Ethylen-Propylen-Kautschuk (EPM, EPDM), Styrol-Butadien-Kautschuk (SBR), Butylkautschuk (IIR), Polyurethankautschuk (PUR), Polyacrylatkautschuk (ACM), Epichlorhydrinkautschuk (CO, ECO), Silikonkautschuk (Q, VQ, MQ etc.), Fluorkautschuk (FM, FKM) oder Chloropren-Kautschuk (CR), elastischem Thermoplast, z.B. Polyvinylchlorid (PVC), thermoplastischem Elastomer (TPE), z.B. elastifiziertes Polyolefin, Styrol-Blockcopolymerisat, Copolyester-Elastomer oder thermoplastisches Polyurethan (TPU), sowie auf Basis von ein- oder mehrkomponentigem Polyester- oder Polyetherurethansystemen oder geeigneten Kombinationen oder Mischungen der genannten Werkstoffe eingesetzt. Bei der Herstellung der Walzen wird der Kautschuk in der Regel durch Vulkanisation vernetzt und erhält somit die gewünschte Festigkeit, während elastische Thermoplaste und thermoplastische Elastomere durch die Abkühlung aus der Schmelze und Polyurethansysteme durch Polymerisation unter Wärmeeinwirkung und anschließende Abkühlung ihre Festigkeit erlangen. Das Material des gummielastischen Walzenmantels kann optional auch geschäumt vorliegen. Die Härte des Materials liegt gewöhnlich im Bereich von etwa 10 bis 100 Shore A.

Das ausgewählte elastomere oder elastische Kunststoffmaterial kann alle üblichen Komponenten, Additive und Füllstoffe sowie optional funktionelle Zusätze wie Substanzen mit funktionellen chemischen Gruppen enthalten. Bei letzteren kann es sich beispielsweise um Substanzen zur Einstellung der Hydrophilie der Walzenoberfläche handeln, z.B. um mono-, oligo- oder polymere Substanzen mit hydrophilen Gruppen, beispielsweise Hydroxyl-, Carboxyl-, Carboxylat-, Amido-, Silanol-, Sulfonsäure-und / oder Sulfonat-Gruppen. Diese und andere funktionelle Zusätze können in das ausgewählte Kunststoffmaterial des Bezuges eingemischt oder, beispielsweise durch Copolymerisation oder polymeranaloge Umsetzung, reaktiv eingebunden sein. In einer weiteren Ausführungsform kann das Bezugsmaterial auch polymere Substanzen enthalten, die funktionelle, insbesondere hydrophile Gruppen sowie Fluoralkylgruppen aufweisen. Durch geeignete Auswahl des elastomeren oder elastischen Kunststoffmaterials sowie durch Modifizierung desselben durch entsprechende Additive, einschließlich Schnittfasern, Mikro- und Nanopartikeln, können spezielle funktionelle Eigenschaften wie chemische Beständigkeit, Reiß- und Schnittfestigkeit, Steifigkeit und Kompressibilität, Glätte und Adhäsion sowie elektrostatische Eigenschaften der Anwendung entsprechend eingestellt werden.

Abgesehen von den üblichen Additiven, Füllstoffen (einschließlich Schnittfasern) und optionalen funktionellen Zusätzen im ausgewählten elastomeren oder elastischen Kunststoffmaterial stellt das textile Flächengebilde erfindungsgemäß die ausschließliche oder zumindest wesentliche mechanische Verstärkung des gummielastischen Walzenmantels dar.

Die Bezeichnung "textiles Flächengebilde" wird in der Textilkunde als Sammelbegriff für alle zwei- und dreidimensionalen Gebilde aus Spinnfasern, Filamenten, Foliebändchen und Garnen verwendet. Beispiele für textile Flächengebilde sind Geflechte, Gelege, Gewebe, Gestricke und Gewirke. Spinnfasern sind Textilfasern begrenzter Länge, die zu Spinnfasergarn versponnen werden können. Filamente sind Textilfasern sehr großer, praktisch endloser Länge und können ebenfalls auch zu Garn verarbeitet werden. Folienbändchen sind längsgeschnittene Folien geringer Dicke, die auch fibrilliert sein und somit eine netzartige Struktur aufweisen können. Garn ist eine Sammelbezeichnung für linienförmige textile Gebilde, die aus Spinnfasern, Filamenten oder Bändchen hergestellt sind. Unterschieden wird zwischen Einfachgarnen, gefachten Garnen (z.B. Rovings) und Zwirnen. Unter Verstärkungsfasern werden gewöhnlich faserhaltige Komponenten im Faserverbundwerkstoff verstanden, die dem Werkstoff hohe Festigkeit und Steifigkeit bei niedrigem Gewicht verleihen. Ihre charakteristischen Eigenschaften sind zudem geringe bzw. negative thermische Dehnung, gute chemische Beständigkeit und gute Temperaturbeständigkeit. Zu den typischen Verstärkungsfasern gehören beispielsweise Aramidfasern, Carbonfasern, Glasfasern und Fasern aus hochfestem Polyethylen. Besonders feine Fasern und Filamente werden auch als Mikrofasern und Mikrofilamente bezeichnet.

Erfindungsgemäß weist das textile Flächengebilde im Wesentlichen von Filamenten, Bändchen, Rovings, Garn, Zwirn oder Kombinationen davon gebildete Fäden auf. Die Fäden können dabei wahlweise aus Fasern, Filamenten und / oder Bändchen gleichen und / oder unterschiedlichen Materials sowie gleicher und / oder unterschiedlicher Dicke, Konsistenz und Qualität bestehen und auch selbst eine konstante und / oder variable Dicke, Konsistenz und Qualität aufweisen. Das Material der Fasern, Filamente und / oder Bändchen besteht insbesondere aus Carbon, Glas, Metall, Naturfaserstoff sowie aus Synthesefasern und Chemiefaserstoff, beispielsweise aus Aramid (Kevlar, Nomex), Polyamid, Polyethylen, Polypropylen, Polyester, Polytetrafluorethylen, Polyvinylidenfluorid, Polyurethan-Kautschuk, Polyvinylchlorid, Rayon, Polyetheretherketon, Polyetherimid, Polyethersulfon, Polysulfon und / oder Kombinationen daraus. Besonders vorteilhaft sind Glasfasern, Carbonfasem und Synthesefasern aus hochschmelzenden Polymeren wie Aramid, Polyamide, Polyacrylnitril, hochfestes Polyethylen und Polyester. Die Fasern, Filamente und Bändchen selbst und / oder ein Garn, Zwirn, Roving, Faserstrang und / oder textiles Flächengebilde daraus können optional auf unterschiedliche Weise imprägniert, chemisch und / oder physikalisch vorbehandelt und / oder - beispielsweise mit Klebstoff, Haftvermittler, Faserfinish, Vernetzungsmittel, Aktivator, einem Kunststofffilm oder Elastomer - beschichtet sein.

Das erfindungsgemäße textile Flächengebilde kann aus wahlweise verwobenen, verflochtenen, gelegten, verknoteten, gestrickten und / oder gewirkten Fäden gleichen und / oder unterschiedlichen Materials bestehen. Ein wesentliches Merkmal des erfindungsgemäßen textilen Flächengebildes besteht darin, dass die darin enthaltenen Fäden sich zumindest teilweise überkreuzen, umschlingen oder berühren und die dabei gebildeten Kreuzungs-, Umschlingungs- oder Berührungspunkte im Wesentlichen verschiebefest fixiert sind. Eine einfache und vorteilhafte Ausführungsform stellen gitter- oder netzartige Gewebe dar, die, beispielsweise in der Bauindustrie, auch als Fasergittergewebe bekannt sind. Besonders vorteilhaft sind sogenannte Drehergewebe, welche die engsten Fadenverkreuzungen der Webtechnologie aufweisen. Drehergewebe werden in Verbundprodukten gewöhnlich mit anderen Materialien wie Folien, Vliesstoffe, Nadelfilze und Schaumstoffe kaschiert oder vemadelt, was aber erfindungsgemäß nicht unbedingt erforderlich ist. Vorteilhaft sind auch textile Flächengebilde, insbesondere Gewebe und Gelege, deren Kreuzungs- oder Berührungspunkte mittels Thermofixierung fixiert sind. Derartige Verfahren werden beispielsweise in EP 0742300 A1 beschrieben. Eine weitere Möglichkeit der Fixierung von Kreuzungs- und Berührungspunkten besteht darin, das textile Flächengebilde oberflächlich mit einer sehr dünnen Harz- oder Polymerbeschichtung zu versehen. Insbesondere bei einem Fadengelege, das beispielsweise parallele Längsfäden und wahlweise rechtwinklig und / oder in gleicher oder variabler Richtung diagonal zu den Längsfäden angeordnete Querfäden aufweist, ist eine Fixierung der Fäden mit einem Bindemittel vorteilhaft.

Ein weiteres wesentliches Merkmal des erfindungsgemäßen textilen Flächengebildes besteht darin, dass das elastomere oder elastische Kunststoffmaterial des gummielastischen Walzenmantels die Struktur des textilen Flächengebildes durchdringt. Mittels dieser Durchdringung wird einerseits das textile Flächengebilde formschlüssig in den gummielastischen Walzenmantel eingebettet und andererseits erreicht, dass das elastomere oder elastische Kunststoffmaterial eine materialschlüssige, einheitliche Bezugsschicht bildet. Zu diesem Zweck ist es erforderlich, dass das textile Flächengebilde im Wesentlichen offenmaschig ist und seine Maschengrößen auf die Viskosität des jeweiligen elastomeren oder elastischen Kunststoffmaterials abgestimmt sind. Dementsprechend sind bei einem zähen Material wie Kautschuk eher größere Maschen vorzusehen, während bei einem flüssigen Material wie Gießpolymer auch enge Maschen vorliegen können. Die beanspruchungsgerechte Maschengröße ist zudem abhängig vom Fadendurchmesser, vom Fadentyp, vom Fadensystem, vom Fadenmaterial, von der Anordnung der Fäden im gewählten textilen Flächengebilde sowie von der Zug- und Reißfestigkeit der Fäden. Die Maschenweite, d.h. die Distanz zwischen zwei benachbarten Fäden, des erfindungsgemäßen textilen Flächengebildes beträgt daher allgemein mindestens 0,5 mm bei niedrigviskosem Bezugsmaterial sowie mindestens 1 mm bei höherviskosem Bezugsmaterial. Vorteilhaft sind beispielsweise Maschenweiten im Bereich von etwa 2 bis etwa 20 mm. Technisch ausreichend sind häufig Maschenweiten von etwa 3 bis etwa 10 mm beziehungsweise von etwa 1/30 bis etwa 1/10 des Außendurchmessers des Walzenmantels. Unter Berücksichtigung von sowohl regelmäßigen als auch unregelmäßigen Strukturen des textilen Flächengebildes gilt auch für die fixierten Kreuzungs- oder Berührungspunkte des textilen Flächengebildes ein Abstand von mindestens 0,5 bzw. 1 mm in Abhängigkeit von der Viskosität des Bezugsmaterials sowie ein vorteilhafter Abstand im Bereich von etwa 2 bis etwa 20 mm. Handelsübliche Gewebe und Geflechte weisen in der Regel quadratische oder rechteckige Maschen aus im rechten Winkel zu einander stehenden Fäden auf. Grundsätzlich jedoch, insbesondere bei Fadengelegen, können die Maschen aber auch andere regelmäßige Formen, beispielsweise Dreieck-, Sechseck-, Achteck-, Parallelogramm-, Rauten-, Trapez- und Drachenformen, oder unregelmäßige Geometrien aufweisen.

Erfindungsgemäß weist die Verstärkung aus dem textilen Flächengebilde wahlweise eine hülsenförmige, gürtelförmige oder radial spiralförmige Gestalt auf. Die gewählte Gestalt kann von einem oder mehreren vorgefertigten zwei- oder dreidimensionalen textilen Gebilden, beispielsweise aus Röhren, Matten, Streifen (= Bänder) oder einzelnen Fäden, gebildet sein. Das textile Flächengebilde kann aber gegebenenfalls auch unter unmittelbarer Herstellung im Produktionsprozess des Walzenmantels erhalten werden. Während hülsen- und gürtelförmige Verstärkungen konzentrisch zum Walzenkern, d.h. mit radial konstantem Abstand zur Mantelfläche des Walzenkerns angeordnet sind, weist das textile Flächengebilde einer radial spiralförmigen Verstärkung einen in Umfangsrichtung ansteigenden Abstand zur Mantelfläche des Walzenkerns auf. Durch diese Anordnung können von einem durchgehenden textilen Flächengebilde mehrere Lagen übereinander hergestellt werden.

Erfindungsgemäß enthält der gummielastische Walzenmantel wenigstens eine Verstärkung aus textilem Flächengebilde. Im Walzenmantel können aber auch zwei oder mehr Verstärkungen aus wahlweise gleichem oder unterschiedlichem textilen Flächengebilde vorliegen, welche wahlweise nebeneinander und / oder übereinander angeordnet sind. Übereinander angeordnete Lagen aus dem verstärkenden textilen Flächengebilde können zwar grundsätzlich auch im direkten Kontakt miteinander stehen, vorzugsweise sind sie aber so angeordnet, dass sie sich nicht gegenseitig berühren. Vorteilhaft beträgt der Abstand zwischen direkt übereinander liegenden Lagen etwa 0,5 bis 2 mm. Prinzipiell kann auf diese Weise der gesamte Walzenmantel mit verstärkendem textilen Flächengebilde gefüllt werden. Vorwiegend, insbesondere bei radial spiralförmiger Anordnung, nimmt das textile Flächengebilde aber einen maximalen Volumenanteil von etwa 50% im gummielastischen Walzenmantel ein. Ausreichend ist in der Regel ein Volumenanteil bis etwa 35%. Häufig genügen sogar 1 oder 2 Lagen aus jeweils einem hülsenförmigen textilen Flächengebilde und / oder 2 bis 5 nebeneinander liegenden gürtelförmigen textilen Flächengebilden. Das textile Flächengebilde ist in einigen Anwendungsfällen vorteilhaft so angeordnet, dass es sich im bestimmungsgemäßen Gebrauch der Walze nicht an der Oberfläche des Walzenmantels abbildet. Dies ist beispielsweise vorteilhaft, wenn beim Auftrag flüssiger Medien (z.B. Lacke) auf Materialbahnen oder Werkstückoberflächen ein möglichst gleichmäßiger Medienauftrag erwünscht ist, oder wenn beim Be- und Verarbeiten von Folien eine Strukturierung der Folie vermieden werden soll. In anderen Anwendungsfällen, z.B. beim Leimauftrag oder wenn eine Strukturbildung erwünscht ist, kann das textile Flächengebilde auch so angeordnet sein, dass es sich unter bestimmungsgemäßen Einsatzbedingungen an der Walzenoberfläche abbildet. In rein mechanischen Anwendungsfällen, beispielsweise bei Schleifwalzen oder Antriebswalzen, ist es oft unerheblich, ob sich das textile Flächengebilde an der Walzenoberfläche abbildet oder nicht.

Da eine wesentliche Funktion des textilen Flächengebildes im gummielastischen Walzenmantel erfindungsgemäß darin besteht, den Walzenmantel gegen die beanspruchungsbedingt an seiner Umfangsfläche einwirkenden Druck- und Scherkräfte zu stabilisieren, ist es wenig hilfreich, das textile Flächengebilde ausschließlich direkt oder nahe am Walzenkern anzuordnen. Funktionsgerecht weist der gummielastische Walzenmantel daher das textile Flächengebilde radial zumindest in den äußeren zwei Dritteln seines Volumens auf. Zur Vermeidung mechanischer Angriffsflächen und gegebenenfalls zur Vermeidung des oben beschriebenen Abbildens befindet sich das textile Flächengebilde vorteilhaft nicht direkt an oder unter der Oberfläche des gummielastischen Walzenmantels und tritt nicht an dieser hervor. Der gummielastische Walzenmantel weist daher vorteilhaft eine geschlossene Oberfläche aus dem elastomeren oder elastischen Kunststoffmaterial auf oder ist von einer anderen geschlossenen Oberfläche, beispielsweise einem PTFE-Schlauch oder Ähnlichem, umhüllt.

Der gummielastische Walzenmantel kann, wie von Mehrschichtwalzen unterschiedlicher Art bekannt, auch aus mehreren Schichten bestehen. Diese können wahlweise aus gleichem und / oder unterschiedlichem Material sein, von gleicher und / oder unterschiedlicher Shore-Härte sein und / oder eine gleiche oder unterschiedliche Dicke aufweisen. Die Oberfläche des gummielastischen Walzenmantels sowie Grenzflächen zwischen den Schichten des Walzenmantels können zudem auch eine Funktionsschicht, beispielsweise aus Polymeren, Elastomeren und / oder funktionellen Zusätzen, in einer Dicke von wenigen µm bis ca. 1 mm aufweisen. Beispiele hierfür sind u.a. in EP 1657076 B1, WO 2009/144271 A1 und WO 2011/006932 A1 offenbart. Weist ein Walzenmantel Schichten unterschiedlicher Shore-Härte auf, so ist das textile Flächengebilde vorteilhaft in dem Material mit der geringeren Härte angeordnet.

Erfindungsgemäß kann sich das textile Flächengebilde axial über die gesamte Länge des Walzenmantels erstrecken oder wahlweise in einem oder mehreren vorbestimmten Abschnitten angeordnet sein. Zum Schutz gegen chemische oder mechanische Einwirkungen kann es vorteilhaft sein, dass die Stirnseiten des Walzenbezuges zumindest eine geschlossene Oberfläche aus dem elastomeren oder elastischen Kunststoffmaterial aufweisen. Auch aus anderen Gründen kann es vorteilhaft sein, an den Stirnseiten des Walzenmantels in einem Bereich von einigen Millimetern oder Zentimetern keine Verstärkung aus dem textilen Flächengebilde vorzusehen. In einigen Anwendungen kann es auch nützlich sein, nur einen Teilbereich, vorzugsweise die seitlichen Endbereiche des Walzenbezuges mit textilen Flächengebilde zu verstärken oder zwei oder mehr Einlagen über- oder nebeneinander vorzusehen. Die Zusammensetzung, Beschichtung, Gestalt und Anordnung einer Verstärkung aus dem textilen Flächengebilde können sowohl innerhalb einer zusammenhängenden Verstärkung als auch unter diversen Verstärkungen innerhalb eines Walzenmantels variieren.

Der Erfindungsgegenstand kann beispielsweise dadurch erhalten werden, dass auf einen mit einer ersten Schicht aus dem elastomeren oder elastischen Kunststoffmaterial vorbeschichteten Walzenkern ein textiles Flächengebilde aufgebracht und dieses mit einer zweiten Schicht aus dem elastomeren oder elastischen Kunststoffmaterial bedeckt wird. Die erste Schicht kann dabei wahlweise aus noch nicht verfestigtem elastomeren oder elastischen Kunststoffmaterial bestehen oder, beispielsweise beim Wiederverwenden einer bereits gebrauchten Walze, eine bereits verfestigte und rundgeschliffene Beschichtung aus dem Kunststoffmaterial sein. Hierauf kann ein bereits vorgefertigtes textiles zwei- oder dreidimensionales Flächengebilde, beispielsweise als Röhre, Matte oder Streifen, aufgebracht werden. Das textile Flächengebilde kann aber auch, beispielsweise durch das Verweben oder Legen von Fäden, direkt an der Oberfläche des vorbeschichteten Walzenkerns hergestellt werden. Zur materialschlüssigen Einbettung können die Mantelfläche des vorbeschichteten Walzenkerns, die Fäden und / oder das textile Flächengebilde beispielsweise mit einem geeigneten Haftvermittler und / oder einem kalt oder heiß klebenden Klebstoff versehen werden. Auf die beschriebene Weise werden insbesondere konzentrisch angeordnete Verstärkungen aus dem textilen Flächengebilde erhalten. Hülsenförmige Verstärkungen werden dabei vorzugsweise aus Röhren oder Matten hergestellt, können aber auch dadurch erhalten werden, dass Streifen aus dem textilen Flächengebilde parallel nebeneinander in Umfangsrichtung der Walze aufgebracht oder entlang der Walzenachse, d.h. axial spiralförmig aufgewickelt werden.
Möglich ist auch, die Mantelfläche des vorbeschichteten Walzenkerns mit einer noch nicht verfestigten, d.h. nicht ausvulkanisierten oder nicht ausgehärteten Schicht aus dem elastomeren oder elastischen Kunststoffmaterial zu versehen und das Fasermaterial in dieser Schicht einzubetten oder in diese Schicht hinein zu drücken.

In den beschriebenen Weisen können auch mehrere Lagen des textilen Flächengebildes in einem vorbestimmten Abstand zueinander innerhalb des gummielastischen Walzenmantels angeordnet werden. Mehrere in einem vorbestimmten Abstand angeordnete Lagen aus dem textilen Flächengebilde können vorteilhaft auch dadurch gebildet werden, dass bei der Herstellung des Walzenmantels eine Kautschukplatte und ein matten- oder streifenförmiges textiles Flächengebilde parallel auf einen Walzenkern aufgewickelt werden. Im Querschnitt der Walze erscheint die Verstärkung aus dem textilen Flächengebilde dann nicht konzentrisch sondern radial spiralförmig. Vorzugsweise ist die Fasereinlage derartig innerhalb des Walzenmantels angeordnet und eingebettet, dass sich bei Betrieb der Walze keine Kante des textilen Flächengebildes an der Mantelfläche des Walzenbezugs abdrückt.

Ein Elastomermantel kann auch vollständig oder schicht- bzw. abschnittsweise im Wickelverfahren aus streifen- oder plattenförmigem unvulkanisierten Kautschuk hergestellt werden, wobei die Verstärkung aus dem textilen Flächengebilde zwischen zwei übereinander liegende Schichten aus unvulkanisiertem Kautschuk angeordnet wird und / oder bereits im streifen- oder plattenförmigen Kautschuk eingebettet ist.

Der erfindungsgemäße Walzenmantel kann zudem auch vollständig oder schicht- bzw. abschnittsweise im Walzenextrusionsverfahren oder im Stripbuilding-Verfahren hergestellt werden: Im Walzenextrusionsverfahren wird ein Walzenkern durch den Kopfaufsatz (sogenannter Querkopf) eines Gummiextruders geführt und dabei mit einer nahtlosen Beschichtung aus dem extrudierten Material versehen. Erfindungsgemäß kann auf diese Weise beispielsweise ein mit Elastomer vorbeschichteter Walzenkern, der an seiner Mantelfläche eine Auflage aus dem textilen Flächengebilde aufweist, mit einer zweiten Elastomerschicht versehen werden. Im Stripbuilding-Verfahren wird gewöhnlich ein extrudierter Kautschukstreifen auf einen rotierenden Walzenkern aufgetragen, welcher wahlweise axial unbewegt ist oder gleichzeitig in axialer Richtung hin und her bewegt wird, so dass der Kautschukstreifen in Form einer axialen Spirale aus sich überlappenden Kautschukstreifen auf dem Walzenkern abgelegt wird. Durch die Geschwindigkeit der axialen Bewegung wird dabei der Neigungswinkel der abgelegten Kautschukstreifen in Bezug auf die Walzenachse eingestellt. Erfindungsgemäß kann wahlweise durchgehend oder abschnittsweise parallel zum Kautschukstreifen ein Streifen aus dem textilen Flächengebilde zugeführt und somit in einem vorbestimmten Abstand zueinander zwischen den Kautschukstreifen auf dem Walzenkern angeordnet werden.

Zur Herstellung eines Walzenmantels aus Ein- oder Mehrkomponenten-Polyurethansystemen eignet sich neben dem klassischen Gießverfahren auch das sogenannte Ribbon flow-Verfahren, bei dem die Polyurethanmasse auf einen rotierenden Walzenkern aufgetragen wird.

Die Oberfläche des erfindungsgemäßen Walzenmantels ist im Wesentlichen zylindrisch. Gelegentlich kann es aber auch vorteilhaft sein, dass die Oberfläche in Achsrichtung etwas gekrümmt ist, d.h. dass der Durchmesser des Walzenmantels in Achsrichtung variiert. Beispiele hierfür sind konische und bombierte Walzenmäntel. Gewöhnlich weist der Walzenmantel zudem eine glatte und geschlossene Oberfläche auf. Es kann aber abhängig von der vorgesehenen Anwendung einer Walze auch vorteilhaft oder erforderlich sein, die Oberfläche gleichmäßig oder ungleichmäßig in unterschiedlicher Weise mit Unebenheiten, Vertiefungen oder Aussparungen zu versehen. So sind bei Druckwalzen im Mehrbahnendruck Einstiche an der Bezugsoberfläche zur Trennung unterschiedlicher Druckbereiche üblich. Nuten und Einstiche weisen beispielsweise Schleifwalzen und Breitstreckwalzen auf. Auftragwalzen, beispielsweise Leim- und Lackierwalzen, sind an der Walzenoberfläche oft ring- oder spiralförmig mit feinen Rillen von wenigen Millimeter oder einigen 10tel Millimeter Tiefe versehen. Eine Oberfläche mit erhöhter Rauigkeit weisen beispielsweise gelegentlich Feuchtwalzen und Anlegewalzen auf.

### Ausführungsbeispiele

1. Auf die Mantelfläche eines metallischen Walzenkerns werden parallel zueinander eine etwa 2 mm dicke Kalanderplatte, d.h. eine plattenförmige Kautschukbahn aus einer NBR-Mischung (Nennhärte nach Vulkanisation: 30 Shore A) und eine einlagige Matte aus einem Drehergewebe aus Polyamidfasern (Code 9996 A, MEP-OLBO GmbH, Deutschland) aufgewickelt. Die Wicklung erfolgt derart, dass direkt auf der Mantelfläche des Walzenkerns zuerst eine Lage aus der Kalanderplatte gebildet wird. Ferner ist die Gewebematte kürzer als die Kalanderplatte, so dass die Mantelfläche des konfektionierten Walzenmantels von mehreren Lagen aus der NBR-Mischung gebildet wird. Die konfektionierte Walze wird nach den üblichen Methoden der Walzenherstellung vulkanisiert und fertiggestellt. Die fertige Walze weist im Querschnitt einen spiralförmigen Aufbau aus dem erhaltenen NBR-Gummi und der darin eingebetteten Gewebematte auf, welcher an den Stirnseiten des Walzenmantels sichtbar ist. Die innere und die äußere Mantelfläche des Walzenmantels bestehen aus einer geschlossenen NBR-Schicht ohne Gewebe.
2. Ein rechteckiger Abschnitt Fadengelege aus Glasfilamentgarn (BAFA^{®}-Fadengelege 240/15, BAFATEX Bellingroth GmbH & Co.KG, Deutschland) wird zu einer zylindrischen Hülse aus zwei Lagen des Fadengeleges geformt. Diese Gewebehülse wird zentriert in einer stehenden zylindrischen Gießform mit einem zentrisch montierten Walzenkern angeordnet und stirnseitig fixiert. Die Gießform wird mit einer Zweikomponenten-Polyesterurethanmischung (Nennhärte nach Aushärtung: 60 Shore A) aufgefüllt und anschließend das Polyurethan unter Wärmeeinwirkung ausgehärtet. Der Walzenrohling wird abschließend nach den üblichen Methoden der Walzenherstellung fertiggestellt. Die fertige Walze weist in der Mitte des Walzenmantels eine konzentrisch zur Walzenachse angeordnete Gewebeschicht aus dem im Polyurethan eingebetteten Fadengelege auf, welche an den Stirnseiten des Walzenmantels sichtbar ist.
3. Im Stripbuilding-Verfahren werden auf einen rotierenden und axial pendelnden Walzenkern sechs Lagen aus einer EPDM-Mischung (Nennhärte nach Vulkanisation: 45 Shore A) aufgetragen. Danach werden drei weitere EPDM-Lagen aufgetragen, wobei parallel zum extrudierten Kautschukstreifen ein etwa gleich breiter Streifen aus PTFE- (Teflon®) beschichtetem Glasgittergewebe Fiberflon® zugeführt wird. Abschließend werden sechs weitere Kautschuklagen ohne Gewebezufuhr hinzugefügt. Die Pendelgeschwindigkeit des Walzenkerns ist dabei so eingestellt, dass die Kautschuk- und Gewebestreifen in einem Winkel von etwa +/- 30° zur Walzenachse angeordnet sind. Die konfektionierte Walze wird nach den üblichen Methoden der Walzenherstellung vulkanisiert und fertiggestellt. Der fertige Walzenmantel weist radial in der Mitte drei axial spiralförmig angeordnete und im Winkel von etwa +/- 30° zur Walzenachse geneigte Lagen aus den Gewebestreifen auf.

## Patentansprüche

1. Walze mit einem gummielastischen Walzenmantel in einer Härte von 10 bis 100 Shore A, der im Wesentlichen aus elastomerem oder elastischem Kunststoffmaterial auf Basis von Naturkautschuk, synthetischem Kautschuk, elastischem Thermoplast, thermoplastischem Elastomer oder ein- oder mehrkomponentigem Polyester- oder Polyetherurethansystem, einschließlich Kombinationen und / oder Mischungen davon, besteht, **dadurch gekennzeichnet, dass**
der gummielastische Walzenmantel wenigstens eine wahlweise hülsenförmig, gürtelförmig oder radial spiralförmig angeordnete Verstärkung aus einem textilen, zwei oder dreidimensionalen Flächengebilde aus Fäden aufweist,
und die Fäden sich zumindest teilweise überkreuzen, umschlingen oder berühren und die dabei gebildeten Kreuzungs- oder Berührungspunkte im Wesentlichen verschiebefest fixiert sind,
wobei das textile Flächengebilde, abgesehen von den üblichen Additiven, Füllstoffen und optionalen funktionellen Zusätzen im ausgewählten elastomeren oder elastischen Kunststoffmaterial, die ausschließliche oder zumindest wesentliche mechanische Verstärkung des gummielastischen Walzenmantels bildet
und wobei das textile Flächengebilde von dem elastomeren oder elastischen Kunststoffmaterial durchdrungen und somit das textile Flächengebilde in dem Kunststoffmaterial eingebettet ist.

2. Walze nach Anspruch 1, **dadurch gekennzeichnet, dass** das textile Flächengebilde einheitlich oder abschnittsweise verschieden aus textilem Gewebe, Geflecht, Gelege, Gestrick oder Gewirke gebildet ist.

3. Walze nach einem der vorstehenden Ansprüche, **dadurch gekennzeichnet, dass** mehrere Lagen des textilen Flächengebildes in einem vorbestimmten Abstand zueinander innerhalb des gummielastischen Walzenmantels angeordnet sind, wobei übereinander angeordnete Lagen des textilen Flächengebildes sich nicht gegenseitig berühren.

4. Walze nach einem der vorstehenden Ansprüche, **dadurch gekennzeichnet, dass** die Fäden wahlweise in Form von Filamenten, Bändchen, Rovings, Garn, Zwirn oder Kombinationen davon vorliegen und wahlweise von Fasern und / oder Mikrofasern aus Glas, Aramid, Polyamid, Polyethylen, Polyacrylnitril, Polyester, Polytetrafluorethylen, Polyvinylidenfluorid, Polyurethan, Polyvinylchlorid, Rayon, Naturfaserstoff, Kohlenstoff oder Metall und / oder einer Kombination daraus gebildet sind.

5. Walze nach einem der vorstehenden Ansprüche, **dadurch gekennzeichnet, dass** das textile Flächengebilde fixierte Kreuzungs- oder Berührungspunkte mit einem Abstand im Bereich von 2 bis 20 mm oder 1/30 bis 1/10 des Außendurchmessers des Walzenmantels aufweist.

6. Walze nach einem der vorstehenden Ansprüche, **dadurch gekennzeichnet, dass** das textile Flächengebilde ein Drehergewebe aus Polyamidfäden aufweist.

7. Walze nach einem der vorstehenden Ansprüche, **dadurch gekennzeichnet, dass** der gummielastische Walzenmantel das textile Flächengebilde radial zumindest in den äußeren zwei Dritteln seines Volumens aufweist.

8. Walze nach einem der vorstehenden Ansprüche, **dadurch gekennzeichnet, dass** der gummielastische Walzenmantel radial von zwei Schichten unterschiedlicher Shore-Härte aus dem elastomeren oder elastischen Kunststoffmaterial gebildet ist, wobei wahlweise die obere oder die untere Schicht eine niedrigere Shore-Härte hat und das textile Flächengebilde aufweist.

9. Verfahren zur Herstellung einer Walze gemäß Anspruch 1, wobei der gummielastische Walzenmantel im Wickelverfahren aus streifen- oder plattenförmigem unvulkanisierten Kautschuk hergestellt wird, **dadurch gekennzeichnet, dass** das textile Flächengebilde zwischen zwei übereinander liegende Schichten aus unvulkanisiertem Kautschuk angeordnet wird und / oder im streifen- oder plattenförmigen Kautschuk eingebettet ist.

10. Verfahren zur Herstellung einer Walze gemäß Anspruch 1, wobei der gummielastische Walzenmantel im Wickelverfahren aus plattenförmigem unvulkanisierten Kautschuk hergestellt wird, **dadurch gekennzeichnet, dass** eine Kautschukplatte und ein matten- oder streifenförmiges textiles Flächengebilde parallel auf einen Walzenkern aufgewickelt werden.

11. Verfahren zur Herstellung einer Walze gemäß Anspruch 1, wobei der gummielastische Walzenmantel im Stripbuilding-Verfahren aus einem extrudierten Kautschukstreifen hergestellt wird, **dadurch gekennzeichnet, dass** durchgehend oder abschnittsweise parallel zum Kautschukstreifen ein Streifen aus dem textilen Flächengebilde zugeführt wird.

12. Verwendung einer Walze nach einem der vorstehenden Ansprüche, **dadurch gekennzeichnet, dass** es sich um eine Farb-, Feucht- oder Lackierwalze für Druckmaschinen handelt.

13. Verwendung einer Walze nach einem der vorstehenden Ansprüche, **dadurch gekennzeichnet, dass** es sich um eine Walze für Walzenauftragmaschinen oderfür Maschinen zur Be- oder Verarbeitung von Holz, Metall, Folien oder Kunststoff handelt.

## Claims

1. Roller having a rubber-elastic roller cover with a hardness of 10 to 100 Shore A, which roller cover is substantially composed of an elastomeric or elastic plastic material based on natural rubber, synthetic rubber, elastic thermoplastic material, thermoplastic elastomeric material or a single-component or multi-component polyester or polyurethane system, including combinations and/or mixtures thereof, **characterized in that**
the rubber-elastic roller cover displays at least one reinforcement, selectively disposed in a casing-like, belt-like or radially helical manner, from a two-dimensional or three-dimensional textile planar formation of threads,
and the threads at least in part intersect, entwine or touch one another, and the intersection or contact points formed thereby are fixed in a substantially displacement-resistant manner, wherein the textile planar formation, irrespective of the usual additives, filler materials and optional functional additives in the selected elastomeric or elastic plastic material, forms the exclusive or at least substantial mechanical reinforcement of the rubber-elastic roller cover, and wherein the textile planar formation is penetrated by the elastomeric or elastic plastic material and the textile planar formation is thus embedded in the plastic material.

2. Roller according to Claim 1, **characterized in that** the textile planar formation is uniformly or in portions variously formed from a woven fabric, braided fabric, laid web, knitted fabric or warpknitted fabric.

3. Roller according to one of the preceding claims, **characterized in that** a plurality of layers of the textile planar formation are disposed at a predetermined spacing in relation to one another within the rubber-elastic roller cover, wherein layers of the textile planar formation which are disposed on top of one another do not touch one another.

4. Roller according to one of the preceding claims, **characterized in that** the threads are selectively present in the form of filaments, tapes, rovings, yarn, doubled yarn or combinations thereof, and are selectively formed from fibres and/or micro-fibres of glass, aramid, polyamide, polyethylene, polyacrylonitrile, polyester, polytetrafluoroethylene, polyvinylidene fluoride, polyurethane, polyvinyl chloride, rayon, natural fibre material, carbon or metal, and/or a combination thereof.

5. Roller according to one of the preceding claims, **characterized in that** the textile planar formation displays fixed intersection or contact points having a spacing in the range of 2 to 20 mm, or 1/30 to 1/10 of the outer diameter of the roller cover.

6. Roller according to one of the preceding claims, **characterized in that** the textile planar formation displays a leno fabric from polyamide threads.

7. Roller according to one of the preceding claims, **characterized in that** the rubber-elastic roller cover radially displays the textile planar formation at least in the outer two thirds of its volume.

8. Roller according to one of the preceding claims, **characterized in that** the rubber-elastic roller cover is radially formed by two layers of different Shore hardness from the elastomeric or elastic plastic material, wherein selectively the upper or the lower layer has a lower Shore hardness and displays the textile planar formation.

9. Method for manufacturing a roller according to Claim 1, wherein the rubber-elastic roller cover is manufactured in the wrapping method from strip-shaped or plate-shaped non-vulcanized rubber, **characterized in that** the textile planar formation is disposed between two layers of non-vulcanized rubber which lie on top of one another and/or is embedded in the strip-shaped or plate-shaped rubber.

10. Method for manufacturing a roller according to Claim 1, wherein the rubber-elastic roller cover is manufactured in the wrapping method from plate-shaped non-vulcanized rubber, **characterized in that** a rubber plate and a mat-shaped or strip-shaped textile planar formation are wound in parallel onto a roller core.

11. Method for manufacturing a roller according to Claim 1, wherein the rubber-elastic roller cover is manufactured in the strip-building method from an extruded rubber strip, **characterized in that** a strip from the textile planar formation is throughout or in portions infed in parallel with the rubber strip.

12. Use of a roller according to one of the preceding claims, **characterized in that** said roller is an inking roller, a dampening roller, or a coating roller for printing machines.

13. Use of a roller according to one of the preceding claims, **characterized in that** said roller is a roller for roller-application machines or for machines for working or processing wood, metal, films/foils, or plastic.

## Revendications

1. Rouleau doté d'une gaine en caoutchouc élastique d'une dureté de 10 à 100 Shore A, constituée essentiellement d'une matière plastique élastomère ou élastique à base de caoutchouc naturel, de caoutchouc synthétique, de thermoplastique élastique, d'élastomère thermoplastique, ou d'un système de polyester ou de polyéther-uréthane à un ou plusieurs composants, ainsi que de leurs combinaisons et/ou mélanges,
**caractérisé en ce que**
la gaine en caoutchouc élastique du rouleau présente au moins un renfort en un produit plat textile à deux ou trois dimensions constitué de fils, disposé sélectivement en forme de douille, en forme de ceinture ou radialement en spirale,
au moins certains des fils se croisant, s'enroulant ou se touchant et les points de croisement ou de contact ainsi formés étant immobilisés de manière à être essentiellement empêchés de se déplacer, le produit plat textile formant exclusivement ou au moins essentiellement le renfort mécanique de la gaine en caoutchouc élastique du rouleau, compte non tenu des additifs, charges et additifs fonctionnels facultatifs et habituels de la matière plastique élastomère ou élastique sélectionnée,
le produit plat textile étant imprégné par la matière plastique élastomère ou élastique et le produit plat textile étant ainsi incorporé dans la matière plastique.

2. Rouleau selon la revendication 1, **caractérisé en ce que** le produit plat textile est formé globalement ou par section distincte de tissu, de treillis, de feutre ou de tricot textile.

3. Rouleau selon l'une des revendications précédentes, **caractérisé en ce que** plusieurs couches de produit textile plat sont disposées à distance mutuelle prédéterminée à l'intérieur de la gaine en caoutchouc élastique du rouleau, les couches superposées de produit textile plat ne se touchant pas mutuellement.

4. Rouleau selon l'une des revendications précédentes, **caractérisé en ce que** les fils présentent sélectivement la forme de filaments, de petits rubans, de mèches, de fils, de fils torsadés ou de leurs combinaisons et sont formés sélectivement de fibres et/ou de microfibres de verre, d'aramide, de polyamide, de polyéthylène, de polyacrylonitrile, de polyester, de polytétrafluoroéthylène, de poly(fluorure de vinylidène), de polyuréthane, de poly(chlorure de vinyle), de rayonne, de fibres naturelles, de carbone ou de métal et/ou d'une de leurs combinaisons.

5. Rouleau selon l'une des revendications précédentes, **caractérisé en ce que** le produit textile plat présente des points de croisement ou de contact immobilisés dont la distance mutuelle est de l'ordre de 2 à 20 mm ou de 1/30 à 1/10 du diamètre extérieur de la gaine du rouleau.

6. Rouleau selon l'une des revendications précédentes, **caractérisé en ce que** le produit textile plat présente un tissu Dreher en fils de polyamide.

7. Rouleau selon l'une des revendications précédentes, **caractérisé en ce que** la gaine élastique en caoutchouc du rouleau présente le produit textile plat disposé radialement au moins dans les deux tiers extérieurs de son volume.

8. Rouleau selon l'une des revendications précédentes, **caractérisé en ce que** la gaine élastique en caoutchouc du rouleau est formée radialement de deux couches de dureté Shore différentes en matière plastique élastomère ou élastique, la couche supérieure ou la couche inférieure ayant sélectivement une dureté Shore plus basse et présentant le produit textile plat.

9. Procédé de fabrication d'un rouleau selon la revendication 1, dans lequel la gaine élastique en caoutchouc du rouleau est réalisée par un procédé d'enroulement de caoutchouc non vulcanisé en ruban ou en plaque, **caractérisé en ce que** le produit textile plat est disposé entre deux couches superposées de caoutchouc non vulcanisé et/ou est incorporé dans le caoutchouc en forme de ruban ou de plaque.

10. Procédé de fabrication d'un rouleau selon la revendication 1, dans lequel la gaine élastique en caoutchouc du rouleau est réalisée par un procédé d'enroulement de caoutchouc non vulcanisé en forme de plaque, **caractérisé en ce qu'**une plaque de caoutchouc et un produit textile plat en forme de tapis ou de ruban est enroulé parallèlement sur une âme de rouleau.

11. Procédé de fabrication d'un rouleau selon la revendication 1, dans lequel la gaine élastique en caoutchouc du rouleau est réalisée par un procédé de formation de bande à partir d'un ruban extrudé en caoutchouc, **caractérisé en ce qu'**un ruban de produit textile plat est amené parallèlement au ruban de caoutchouc, de manière continue ou par sections.

12. Utilisation d'un rouleau selon l'une des revendications précédentes, **caractérisée en ce que** le rouleau est un rouleau d'encrage, d'humidification ou de peinture d'une machine d'impression.

13. Utilisation d'un rouleau selon l'une des revendications précédentes, **caractérisée en ce que** le rouleau est un rouleau pour machine d'application de cylindre ou pour machine de traitement de bois, de métal, de film ou de matière plastique.
